# EUROPEAN PATENT SPECIFICATION

(11) **EP 3 990 836 B1**
(45) Date of publication and mention of the grant of the patent: **19.06.2024**
(21) Application number: 20747456.0
(22) Date of filing: 24.06.2020
(51) Int. Cl.: F24H 9/14, F24H 9/20, F16K 11/02, F16K 41/00, F16K 27/02, F16K 11/04, F16K 1/00, F16K 11/044, F16K 41/04, F16K 43/00

(54) **A CARTRIDGE FOR A DIVERTER VALVE**
KARTUSCHE FÜR EIN UMSCHALTVENTIL
CARTOUCHE POUR VANNE DE DÉRIVATION

(30) Priority: 25.06.2019 GB 201909078
(43) Date of publication of application: 04.05.2022
(73) Proprietor: Buycombi Ltd, Gerrards Cross Bucks SL 98NJ (GB)
(72) Inventor: WEEKS, Donald R., Gerrads Cross Bucks, SL9 8NJ (GB)
(74) Representative: Handsome I.P. Ltd
(86) International application number: PCT/GB2020/000062
(87) International publication number: WO 2020/260845

(56) References cited:
- EP-A1- 1 544 523
- EP-A2- 1 321 700
- DE-U1- 29 722 208
- DE-U1-202018 103 479
- US-A- 6 035 458

## Description

The present invention relates generally to a cartridge for a diverter valve and finds particular, although not exclusive, utility with domestic combination boilers.

Combination boilers are arranged with a closed circuit of system water which is heated up and either used through radiators to provide heating, or through a heat exchanger to heat water for distribution via taps and the like. To switch between the two states a diverter valve is provided. This includes a bung movable between two positions to selectively seal against orifices within the valve for controlling the flow of the system water circuit. The bung is typically arranged on the end of a rod which is moved by means of a motor and/or solenoid. The motor and/or solenoid is located outside of the diverter valve to keep it away from any water. This means that the rod must pass through a wall of the body of the diverter valve. To prevent leaks around this rod a seal is arranged. This seal typically wears over time such that the diverter valve leaks. To replace the seal, without water leaking out, the hot water circuit must be drained. This is time consuming. In some circumstances the whole diverter valve must be replaced. In other circumstances the diverter valve includes a cartridge which includes the rod and bung. In these situations, it is possible to only need to replace the cartridge, however, this still requires the circuit to be drained. For example, EP1321700A2, EP1544523A1, DE202018103479U1, and US6035458A provide examples of systems wherein the circuit must be drained before the seals can be replaced.

DE29722208U1 describes an alternative system that does not require the circuit to be drained.

It is therefore desirable to be able to replace the worn seal without the need to drain down the circuit. It is also desirable to be able to replace the worn seal without the need to replace the diverter valve or the cartridge.

In a first aspect, the present invention provides a cartridge for a diverter valve, for use in domestic combination boilers, and for use with a rod comprising a bung for selectively sealing orifices in a diverter valve for controlling the flow of water heated by the boiler, the cartridge comprising a hollow body, having an upper part and a base, through which a rod is configured to be movable in use, the cartridge further comprising a replaceable closure in the upper part including a first bore through which a rod is configured to be moveably arranged in use, the closure including a first sealing member for sealing the bore with a rod configured to be present, to thereby prevent water leakage, the cartridge also comprising a second bore through which a rod is movably arranged in use, and a second sealing member, the second sealing member having a first state whereby it is compressible between the upper part and base for sealing the second bore with a rod configured to be present, to prevent water leakage when the closure is removed when replacing the first sealing member, and a second state whereby the second sealing member is incompressible, wherein the second sealing member resides in a gap between the upper part and base when in the second uncompressed state during use with a rod moving reciprocatively; wherein the upper part is movable axially relative to the body for compressing the second sealing member against the base to achieve the first state; and wherein the base is fixed relative to the body.

In this way, the first sealing means on the replaceable closure will become worn, since it presses against the rod and the rod moves relative to it. Before it becomes worn it prevent leaks of water travelling along the bore through which the rod extends. When it becomes worn it is necessary to replace it. In order to do this, and a void draining of the circuit, it is necessary to provide a seal further along the length of the rod between the first sealing member and the bung. This is achieved by means of the second sealing member. During use of the diverter valve the second sealing member may be maintained in the second state. This may be effected by a lack of compressional force applied to it. Also, by means of friction between the rod and the second sealing member holding it stationary relative to the rod during use, it maynot press against the upper part or base. In an uncompressed state it will not becomepermanently deformed and/or worn and is therefore available when required to provide a temporary seal, in the first position, when the closure is removed.

The base and body may be integral with one another. The body may comprise a valve part beneath the base.

The base may comprise a seat in which the second sealing member is configured to reside when in the first state. The seat may be arranged to limit outward radial deformation of the second sealing member. This may be effected by arranging the seat to have a certain size relative to the size of the second sealing member. For instance, the size of the seat may be the same as, or only slightly larger than the size of the second sealing member. Alternatively, the size of the seat may be slightly smaller than the size of the second sealing member. In this regard, the size may be defined by the perimeter of the second sealing member or seat. This may aid sealing against the base. The seat may be a recess provided in the base.

The second sealing member may be arranged so that when it is compressed in the first state it is deformed, relative to its uncompressed second state, resulting in expansion radially inward towards the rod and outward toward the base.

Such expansion may result in sealing against the rod and the base to thereby prevent water leakage during replacement of the closure.

The first sealing member may comprise one or more "O" rings. The "O" rings may be arranged around the circumference of the replaceable closure. The second sealing member may comprise an "O" ring. Other forms of sealing members are contemplated instead of "O" rings, such as washers.

The first bore and second bore may be co-axial.

The upper part may be arranged to receive the closure. The upper part may include a recess for receiving the replaceable closure. The upper part and replaceable closure may include corresponding threads for allowing the replaceable closure to be screwed into, and out of, the upper part.

The upper part may extend across the whole of the cross-sectional area of the body to thereby substantially seal it.

The upper part may be rotatable relative to the body. The rotation of the upper part may cause it to move axially relative to the body. This may beachieved by corresponding threads provided on the inside surface of the body and the outer surface of the upper part.

The cartridge may further comprise a closure base sealing member for sealing the closure against the upper part. This may be a washer although other forms of sealing members are contemplated such as sealing compound.

The cartridge may further comprise a cartridge base sealing member for sealing against a diverter valve housing.

The cartridge body may be adapted to retro-fit into an existing boiler. It may comprise tabs which click-lock into a diverter valve case.

The cartridge may not include a rod with a bung since it is contemplated that the cartridge may be retrofitted to an existing boiler such that the existing rod and bung are re-used. However, in one example, the cartridge may include a rod with a bung.

In a second aspect, the present invention provides a diverter valve for use in domestic combination boilers, the diverter valve comprising the cartridge of the first aspect.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a schematic diagram of a central heating system including a boiler and diverter valve;
Figure 2 is a perspective exploded view of a cartridge;
Figure 3 is a perspective view from below the upper part of the cartridge of Figure 2;
Figure 4 is a perspective view from above the body of the cartridge of Figure 2; and
Figure 5 is a schematic cross-sectional view of a part of a cartridge.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in anyother manner. It is to be understood that the terms so used are interchangeable under appropriate circumstances and that operation is capable in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

it is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any embodiment or aspect of the invention may be combined in any suitable manner, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

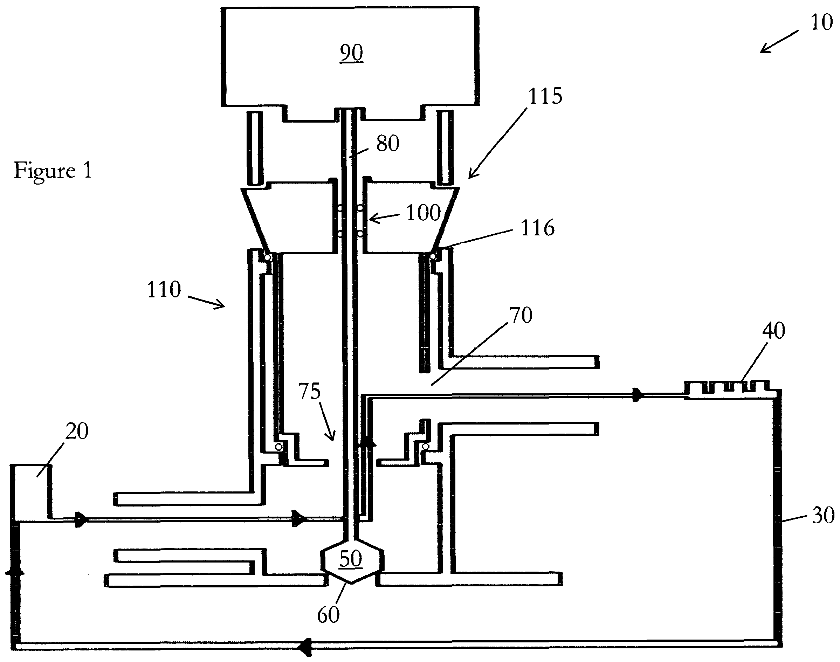

In Figure 1, a prior art boiler system 10 is schematically depicted including a heating device (typically a gas burner) 20 connected to a circuit of pipework 30. The rod 80 is reciprocatively moved up and down through the diverter valve 110 by motor or solenoid 90. In the state shown the bung 50 at the lower end of the rod 80 is in the downward position such that it closes aperture 60. This forces the water through the circuit 30 from the boiler through aperture 70 in the diverter valve 110 to radiators 40. With the rod 80 in the upward position (not shown) the bung will open aperture 60 and close aperture 75 such that the flow is directed around a different circuit (not shown) to provide domestic hot water. A cartridge 115 is indicated fitting into the diverter valve 110. One or more seals 16 are provided at the base of the cartridge to seal against the body of the diverter valve.

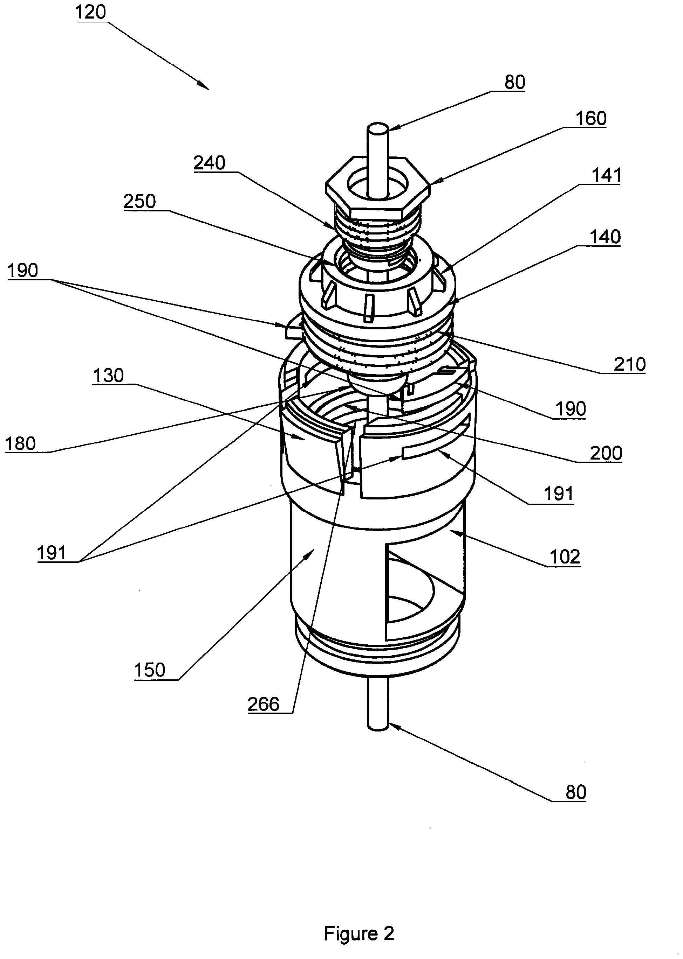

In Figure 2, a cartridge 120 is shown including a substantially cylindrical body with a hollow bore therethrough allowing a rod 80 to move up and down and thus move a bung (not shown) to selectively open and close apertures.

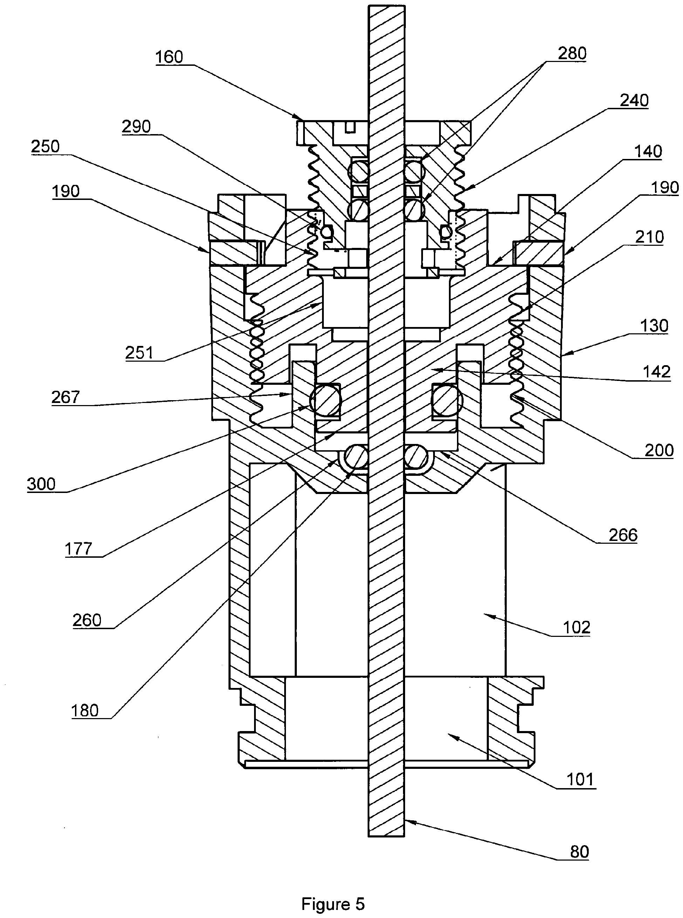

The body comprises an upper portion which includes a cavity for receiving the upper part 140, and a lower portion 150 which acts as a valve having an inlet 101 at its base (refer to Figure 5) and an outlet 102 in its side.

A base 266 separates the upper and lower portions with an aperture for allowing the rod 80 to move axially therethrough such that it may move a bung (not shown) to control flow through the inlet 101. The base 266 in conjunction with sealing members may fluidly isolate the cavity in the upper portion from the lower portion.

Arranged on the rod 80 are an upper part 140 and a replaceable closure 160. Each has a bore through which the rod 80 extends. The bores extend approximately centrally through each part. Each part is substantially cylindrical in shape, allowing the upper part to rotate within the body 130, and to allow the closure 160 to rotate within the upper part 140. In this regard, the closure 160 includes threads 240 on its exterior surface which cooperate with threads 250 provided on the internal surface of the upper part 140. In this way, the closure 160 may be screwed into and out of the upper part 140.

The upper part 140 also includes threads 210 on its exterior surface which cooperate with threads 200 provided on the internal surface of the body 130. In this way, the upper part 140 may be screwed into and out of the body 130.

The body 130 has openings 191 to allow the fitting of retainers 190 after the body 130 and upper part 140 have been assembled thereby preventing accidental removal of the upper part 140 from the body 130 when in the operational environment. The retainers 190 are planar elements which are releasably fittable into the openings 191 in the body 130 so that they project into a space inside the body 130 above the upper part 140, with the upper part screwed fully into the body. Their presence prevents the upper part from being removed from the body.

The upper part also includes fins 141 on its upper surface which allow it to be turned by hand either directly or with a custom tool. Other means of rotating the upper art are contemplated without the use of fins, such as the provision of a nut to be rotated with a spanner.

A secondary sealing member 180 (in this instance an "O" ring) is arranged on the rod 80 between the upper part and base 266. This may seal against the rod 80 to fluidly isolate the cavity in the upper portion from the lower portion, as will be described below.

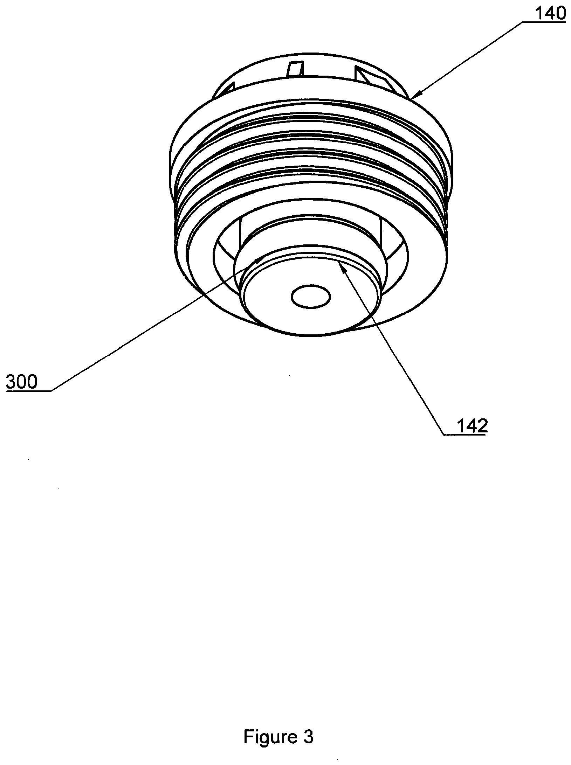

In Figure 3 the underside of the upper part 140 is shown. A cylindrical protrusion 142 extends from the centre of the underside of the upper part and an "O" ring seal 300 is arranged around this protrusion for sealing against the body 130 to aid in fluidly isolating the cavity in the upper portion from the lower portion.

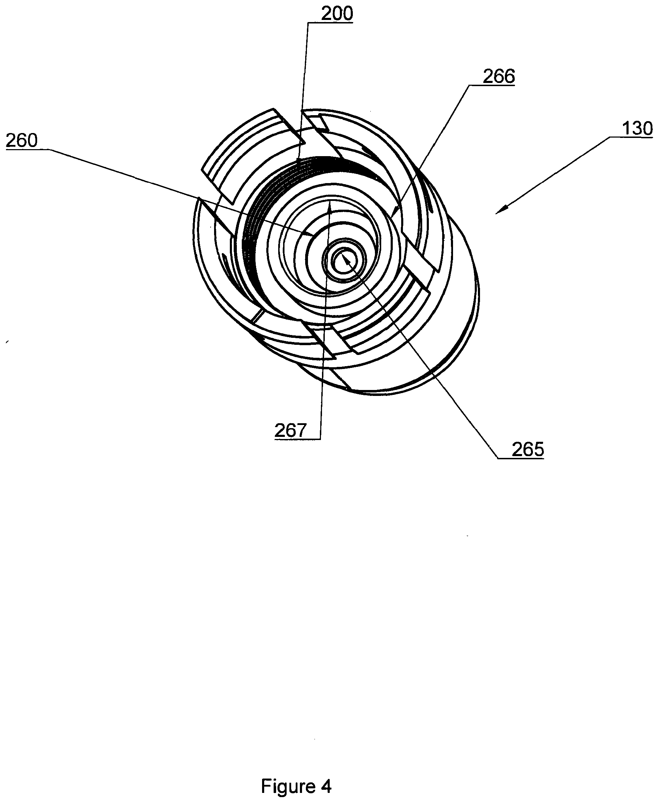

Figure 4 shows the cavity in the upper portion of the body 130 of the cartridge 120 without the upper part 140 present. An annulus 267 is arranged in the base 266 of the body 130 around the bore 265 through which the rod extends. It is to be noted that the base 266 of the body 130 is closed other than for the bore 265. Accordingly, the only aperture through which water may leak is between the rod 80 and the bore 265.

The annulus 267 extends upwardly from the base 266 of the body 130, having a radius approximately half the radius of the body outer surface, to provide an inner surface against which the cylindrical protrusion 142 of the upper part 140 is sealed by means of the "O" ring 300, described above. At the base of, and within, the annulus 267 a seat 260 is provided.

The cross-section in Figure 5 will now be described to explain how the cartridge works. The body 130 radially encloses the upper part 140. The upper part 140 is movableaxially within the cavity but has its axial movement limited by the base 266 of the body 130 at one end of travel, and by the retainers 190, at the other end of travel.

An "O" ring 300 is arranged circumferentially around the protrusion 142 which extends towards the base 266 from the upper part 140. This "O" ring 300 seals against the inner surface of the cylindrical wall 267 which extends upwardly from the base 150 towards the upperpart 140. This sealing occurs with the upper part 140 at any position between its two ends of travel.

The closure 160 is shown unscrewed from the upper surface of the upper part 140. The recess 251 into which it may be screwed includes threads 250 on its inner surface to cooperate with the threads 240 arranged around the outer surface of the closure 160. The rod 80 is shown passing through the centre of the closure 160. Two "O" rings 280 are provided as the first sealing member, although only one "O" ring is possible, or more than two. They are arranged circumferentially around the central bore through which the rod 80 extends so as to seal against the rod 80 and prevent any water from leaking out. In use, the rod 80 moves up and down which, over time, will produce wear on the seals 280 leading to leakage of water along the rod and out of the closure.

An "O" ring seal 290 is arranged around the base of the closure 160 to seal against the inside surface of the recess 251.

The two sets of corresponding threads 200, 210 are shown in relation to the upper part 140 and the body 130 to permit the upper part 140 to screw into and out of the cavity in the upper portion of the body 130.

The arrangement as shown is the normal use with no leaks such that the rod 80 moves up and down and water leakage is prevented by means of the first sealing member 280.

No water may leak out of the cartridge due to the combination of the various "O" rings 300, 290, 280, 116.

At this time, it is to be noted that the second sealing member 180 is free to move in the gap between the base 177 of the upper part and base 266 and is not under compression. It may move with the rod, being held in position on the rod by friction therewith. However, when it is required to replace the first sealing member 280 by removal of the closure 160 the following actions are undertaken. The upper part 140 is rotated by hand, or with a custom tool, and moves downwardly towards the base 266 of the body 130 by way of the reciprocating threads 210 and 200. This will urge the second sealing member 180 against the seat 260 provided in the base of the base and around the bore 265. This compression is provided by the upper part moving towards the base 150. The movement of the second sealing member may be relative to the rod as well as relative to the base. Such movement relative to the rod may be due to the friction between the second sealing member and the rod being overcome by the force applied by the upper part.

As the second sealing member 180 is compressed it will extend radially inward against the rod 80. The second sealing member may also tend to extend radially outward. However, the seat 260 (in the shape of a hollow annulus in the base 266, or the base 177 of the upper part, and around the bore 265) may act to limit the movement of this "O" ring so that its lateral deformation is directed radially inward towards the rod. In this way, the second sealing member 180 will prevent any water from leaking up through the bore 265, in which the rod 80 extends, into the upper part and out of the cartridge, while the closure is being replaced.

It is to be understood that the seat may not be required to be a depression within the base. Rather, the second sealing member may be compressed against a substantially planar base of the base.

Once the closure has been replaced, the upper part may be rotated in the opposite direction as previously mentioned such that it is moved axially upwardly away from the base of the body. This will remove the compressing force previously applied to the second sealing member 180, to thereby extend its life. In this regard, it should be noted that the seat 260 does not by itself hold the second sealing member 180 under compression. In a relatively short period of time, the second sealing member will move away from the base 266 / seat 260 and thereafter reside in the gap between the base 177 of the upper part 140 and the base 266, such that it moves with the rod, in use, and is not worn by compression.

The cartridge allows for replacement of the primary sealing means without the need for removal of the cartridge from the boiler or for draining down the boiler circuit. The replacement of the primary sealing means may be effected by replacement of the closure, however, it is contemplated that one could merely replace the sealing means incorporated with the closure, and re-use the existing closure.

## Claims

1. A cartridge for a diverter valve, for use in domestic combination boilers, and for use with a rod (80) comprising a bung (50) for selectively sealing orifices in a diverter valve for controlling the flow of water heated by the boiler, the cartridge comprising a hollow body (130), having an upper part (140) and a base (266), configured such that through the upper part (140) and base (266) the rod (80) is movable in use, the cartridge further comprising a replaceable closure (160) in the upper part (140) including a fir bore configured such that the rod (80) is moveable in use through the first bore, the closure (160) including a first sealing member (280) configured for sealing the bore with the rod (80) when being present, to thereby prevent water leakage, the cartridge also comprising a second bore (265) through which a rod (80) is movably arranged in use, and a second sealing member (180), **characterized in that** the second sealing member (180) having a first state whereby it is compressed between the upper part (140) and base (266) for sealing the second bore with the rod (80) when being present, to prevent water leakage when the closure (160) is removed when replacing the first sealing member (280), and a second state whereby the second sealing member (180) is uncompressed, wherein the second sealing member (180) resides in a gap between the upper part (140) and base (266) when in the second uncompressed state during use with the rod (80) moving reciprocatively; wherein the upper part (140) is movable axially relative to the body (130) for compressing the second sealing member (180) against the base (266) to achieve the first state; and wherein the base (266) is fixed relative to the body.

2. The cartridge of claim 1, wherein the upper part (140) is rotatable relative to the body (130).

3. The cartridge of either one of claims 1 and 2, wherein the base (266) comprises a seat (260) in which the second sealing member (180) is configured to reside when in the first state.

4. The cartridge of claim 3, wherein the seat (260) is arranged to limit outward radial deformation of the second sealing member (180).

5. The cartridge of any preceding claim, wherein the second sealing member (180) is arranged so that when it is compressed in the first state it is deformed, relative to its uncompressed state in the second position, resulting in expansion radially inward towards the rod (80) and outward toward the base (266).

6. The cartridge of any preceding claim, wherein the first sealing member (280) comprises one or more "O" rings.

7. The cartridge of any preceding claim, wherein the second sealing member (180) comprises an "O" ring.

8. The cartridge of any preceding claim, wherein the upper part (140) is arranged to receive the closure (160).

9. The cartridge of any preceding claim, further comprising a closure base sealing member (290) for sealing the closure (160) against the upper part (140).

10. The cartridge of any preceding claim, further comprising a cartridge base sealing member (300) for sealing against a diverter valve housing.

11. The cartridge of any preceding claim including a rod (80) comprising a bung (50).

12. A diverter valve for use in domestic combination boilers, the diverter valve comprising the cartridge of any preceding claim.

## Patentansprüche

1. Eine Kartusche für ein Umschaltventil zur Verwendung in Haushalts-Kombikesseln und zur Verwendung mit einem Stab (80), der einen Stöpsel (50) zum selektiven Verschließen von Öffnungen im Umschaltventil zur Steuerung des Durchflusses von durch den Kessel erhitztem Wasser umfasst, wobei die Kartusche umfasst
einen Hohlkörper (130) mit einem oberen Teil (140) und einer Basis (266), die so konfiguriert ist, dass der Stab (80) durch den oberen Teil (140) und die Basis (266) bei der Benutzung beweglich ist,
wobei die Kartusche weiterhin im oberen Teil (140) einen austauschbaren Verschluss (160) umfasst, der eine erste Bohrung aufweist, die so konfiguriert ist, dass der Stab (80) im Gebrauch durch die erste Bohrung beweglich ist,
wobei der Verschluss (160) ein erstes Dichtungselement (280)enthält, derart konfiguriert, dass es die Bohrung mit dem Stab (80) abdichtet, wenn es vorhanden ist, um dadurch ein Austreten von Wasser zu verhindern, wobei die Kartusche auch eine zweite Bohrung (265), durch die ein Stab (80) im Gebrauch beweglich angeordnet ist, und ein zweites Dichtungselement (180) umfasst,
**dadurch gekennzeichnet, dass**
das zweite Dichtungselement (180) einen ersten Zustand hat, in dem es zwischen dem oberen Teil (140) und der Basis (266) zusammengedrückt ist, um die zweite Bohrung mit dem Stab (80) abzudichten, wenn dieser vorhanden ist, um ein Austreten von Wasser zu verhindern, wenn der Verschluss (160) entfernt wird, wenn das erste Dichtungselement (280) ersetzt wird, und
einen zweiten Zustand, in dem das zweite Dichtungselement (180) nicht zusammengedrückt ist, wobei das zweite Dichtungselement (180) in einem Spalt zwischen dem oberen Teil (140) und der Basis (266) liegt, wenn es sich in dem zweiten, nicht zusammengedrückten Zustand während der Verwendung befindet, wobei sich der Stab (80) hin und her bewegt,
wobei der obere Teil (140) axial relativ zu dem Körper (130) beweglich ist, um das zweite Dichtungselement (180) gegen die Basis (266) zu drücken, um den ersten Zustand zu erreichen, und
wobei die Basis (266) relativ zu dem Körper fixiert ist.

2. Kartusche nach Anspruch 1, wobei der obere Teil (140) relativ zum Körper (130) drehbar ist.

3. Kartusche nach einem der Ansprüche 1 oder 2, wobei die Basis (266) einen Sitz (260) umfasst, in dem das zweite Dichtungselement (180) so konfiguriert ist, dass es sich im ersten Zustand befindet.

4. Kartusche nach Anspruch 3, wobei der Sitz (260) so angeordnet ist, dass er die radiale Verformung des zweiten Dichtungselements (180) begrenzt.

5. Kartusche nach einem der vorhergehenden Ansprüche, wobei das zweite Dichtungselement (180) so angeordnet ist, dass es, wenn es im ersten Zustand zusammengedrückt wird, relativ zu seinem nicht zusammengedrückten Zustand in der zweiten Position verformt wird, was zu einer Ausdehnung radial nach innen in Richtung des Stabs (80) und nach außen in Richtung der Basis (266) führt.

6. Kartusche nach einem der vorhergehenden Ansprüche, wobei das erste Dichtungselement (280) einen oder mehrere O-Ringe umfasst.

7. Kartusche nach einem der vorhergehenden Ansprüche, wobei das zweite Dichtungselement (180) einen O-Ring umfasst.

8. Kartusche nach einem der vorhergehenden Ansprüche, wobei der obere Teil (140) so angeordnet ist, dass er den Verschluss (160) aufnimmt.

9. Kartusche nach einem der vorhergehenden Ansprüche, weiter umfassend ein Verschlussbasis-Dichtungselement (290) zum Abdichten des Verschlusses (160) gegen das obere Teil (140).

10. Kartusche nach einem der vorhergehenden Ansprüche, weiter umfassend ein Kartuschen-Basis-Dichtungselement (300) zur Abdichtung gegen ein Umschaltventilgehäuse.

11. Kartusche nach einem der vorhergehenden Ansprüche umfassend ein Stab (80) mit einem Stöpsel (50).

12. Umschaltventil zur Verwendung in Haushalts-Kombikesseln, wobei das Umschaltventil die Kartusche nach einem der vorhergehenden Ansprüche umfasst.

## Revendications

1. - Cartouche pour une vanne de dérivation, destinée à être utilisée dans des chaudières mixtes domestiques et avec une tige (80) comprenant une bonde (50) pour sceller de manière sélective des orifices dans une vanne de dérivation pour contrôler l'écoulement d'eau chauffée par la chaudière, la cartouche comprenant un corps creux (130), ayant une partie supérieure (140) et une base (266), configuré de telle sorte que la tige (80) est mobile en utilisation à travers la partie supérieure (140) et la base (266), la cartouche comprenant en outre une fermeture remplaçable (160) dans la partie supérieure (140) comprenant un premier alésage configuré de telle sorte que la tige (80) est mobile en utilisation à travers le premier alésage, la fermeture (160) comprenant un premier élément d'étanchéité (280) configuré pour assurer une étanchéité de l'alésage avec la tige (80) lorsqu'elle est présente, pour empêcher ainsi une fuite d'eau, la cartouche comprenant également un second alésage (265) à travers lequel une tige (80) est disposée de manière mobile en utilisation, et un second élément d'étanchéité (180), **caractérisée par le fait que** le second élément d'étanchéité (180) a un premier état dans lequel il est comprimé entre la partie supérieure (140) et la base (266) pour assurer une étanchéité du second alésage avec la tige (80) lorsqu'elle est présente, pour empêcher une fuite d'eau lorsque la fermeture (160) est retirée lors d'un remplacement du premier élément d'étanchéité (280), et un second état dans lequel le second élément d'étanchéité (180) n'est pas comprimé, le second élément d'étanchéité (180) résidant dans un intervalle entre la partie supérieure (140) et la base (266) lorsqu'il est dans le second état non comprimé pendant une utilisation avec la tige (80) se déplaçant en va-et-vient ; la partie supérieure (140) étant mobile axialement par rapport au corps (130) pour comprimer le second élément d'étanchéité (180) contre la base (266) afin d'atteindre le premier état ; et la base (266) étant fixe par rapport au corps.

2. - Cartouche selon la revendication 1, dans laquelle la partie supérieure (140) est apte à tourner par rapport au corps (130).

3. - Cartouche selon l'une quelconque des revendications 1 et 2, dans laquelle la base (266) comprend un siège (260) dans lequel le second élément d'étanchéité (180) est configuré pour résider lorsqu'il est dans le premier état.

4. - Cartouche selon la revendication 3, dans laquelle le siège (260) est agencé pour limiter une déformation radiale vers l'extérieur du second élément d'étanchéité (180).

5. - Cartouche selon l'une quelconque des revendications précédentes, dans laquelle le second élément d'étanchéité (180) est agencé de telle sorte que, lorsqu'il est comprimé dans le premier état, il est déformé par rapport à son état non comprimé dans la seconde position, ce qui entraîne une extension radiale vers l'intérieur vers la tige (80) et vers l'extérieur vers la base (266).

6. - Cartouche selon l'une quelconque des revendications précédentes, dans laquelle le premier élément d'étanchéité (280) comprend un ou plusieurs joints toriques.

7. - Cartouche selon l'une quelconque des revendications précédentes, dans laquelle le second élément d'étanchéité (180) comprend un joint torique.

8. - Cartouche selon l'une quelconque des revendications précédentes, dans laquelle la partie supérieure (140) est agencée pour recevoir la fermeture (160) .

9. - Cartouche selon l'une quelconque des revendications précédentes, comprenant en outre un élément d'étanchéité de base de fermeture (290) pour assurer une étanchéité de la fermeture (160) contre la partie supérieure (140).

10. - Cartouche selon l'une quelconque des revendications précédentes, comprenant en outre un élément d'étanchéité de base de cartouche (300) pour assurer une étanchéité contre un boîtier de vanne de dérivation.

11. - Cartouche selon l'une quelconque des revendications précédentes, comprenant une tige (80) comportant une bonde (50).

12. - Vanne de dérivation destinée à être utilisée dans des chaudières mixtes domestiques, la vanne de dérivation comprenant la cartouche selon l'une quelconque des revendications précédentes.
